# EUROPÄISCHE PATENTSCHRIFT

(11) **EP 3 918 757 B1**
(45) Veröffentlichungstag und Bekanntmachung des Hinweises auf die Patenterteilung: **27.08.2025**
(21) Anmeldenummer: 20702618.8
(22) Anmeldetag: 29.01.2020
(51) Int. Cl.: H04L 12/40

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM, AND METHOD FOR COMMUNICATING IN A SERIAL BUS SYSTEM
STATION D'ABONNÉ POUR SYSTÈME DE BUS SÉRIE ET PROCÉDÉ DE COMMUNICATION DANS UN SYSTÈME DE BUS SÉRIE

(30) Priorität: 01.02.2019 DE 102019201316
(43) Veröffentlichungstag der Anmeldung: 08.12.2021
(73) Patentinhaber: Robert Bosch GmbH, 70442 Stuttgart (DE)
(72) Erfinder: HARTWICH, Florian, 72762 Reutlingen (DE); MUTTER, Arthur, 73765 Neuhausen (DE)
(86) Internationale Anmeldenummer: PCT/EP2020/052079
(87) Internationale Veröffentlichungsnummer: WO 2020/157086

(56) Entgegenhaltungen:
- EP-A1- 2 712 123
- US-A1- 2006 268 855
- US-A1- 2010 158 045
- US-B1- 6 728 892
- BOSCH GMBH: "CAN with Flexible Data-Rate WHITE PAPER", no. Version 1.1, 2 May 2011 (2011-05-02), pages 1 - 16, XP007921281, Retrieved from the Internet <URL:http://www.bosch-semiconductors.de/media/pdf/canliteratur/can_fd.pdf>
- "Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, vol. msc.upamd, 18 November 2010 (2010-11-18), pages 1 - 52, XP017637056
- ISO/TC 22/SC 3: "Draft International Standard ISO/DIS 15765-2.2 (15765-2.4): Road Vehicles - Diagnostics on Controller Area Networks (CAN)- Part 2: Network layer services", DRAFT INTERNATIONAL STANDARD ISO/DIS, XX, XX, 1 January 2003 (2003-01-01), pages I - VI, 1, XP002261328
- ROBERT BOSCH: "CAN with Flexible Data-Rate Specification Version 1.0", 17 April 2012 (2012-04-17), XP055553306, Retrieved from the Internet <URL:https://web.archive.org/web/20151211125301if_/http://www.bosch-semiconductors.de/media/ubk_semiconductors/pdf_1/canliteratur/can_fd_spec.pdf> [retrieved on 20190207]

## Beschreibung

### Technisches Gebiet

Die vorliegende Erfindung betrifft eine Teilnehmerstation für ein serielles Bussystem und ein Verfahren zur Kommunikation in einem seriellen Bussystem, mit welchen neben dem reinen Datentransport auch andere Funktionen unterstützt werden, wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem.

### Stand der Technik

Für die Kommunikation zwischen Sensoren und Steuergeräten, beispielsweise in Fahrzeugen, wird aus Kostengründen anstelle einer Punkt-zu-Punkt-Verbindung derzeit immer häufiger ein Bussystem eingesetzt. Ein Standard für ein solches Bussystem ist beispielsweise vorgeschlagen in ISO/TC 22/SC 3, "Draft International Standard ISO/DIS 15765-2.2 (15765-2.4): Road Vehicles - Diagnostics on Controller Area Networks (CAN)- Part 2: Network layer services", DRAFT INTERNATIONAL STANDARD ISO/DIS, XX, XX, 1. Januar 2003), (2003-01-01), Seiten I - VI, 1, XP002261328. Hierin ist die Übertragung eines einzelnen Rahmens mit einer festen Länge von 8 Bytes im Datenfeld und von segmentierten Rahmen beschrieben. Die segmentierten Rahmen werden aus einem Rahmen gebildet, der zu lang für einen einzelnen Rahmen ist. Alle Rahmen haben am Anfang des Datenfelds ein Feld, das angibt, ob der Rahmen ein einzelner Rahmen oder ein erster oder nachfolgender oder letzter Rahmen eines segmentierten Rahmens ist.

Zudem ist ein Bussystem bekannt, in welchem Daten als Nachrichten im Standard ISO11898-1:2015 als CAN Protokoll-Spezifikation mit CAN FD übertragen werden. Vorhergehende Entwicklungen zu diesem Standard sind auch in vorangehenden Dokumenten beschrieben, beispielsweise der EP 2 712 123 A1, US 2006/268855 A1, US 2010/158045 A1, US 6,728,892 B1 oder einer Veröffentlichung der BOSCH GmbH "CAN with Flexible Data-Rate WHITE PAPER" Nr. Version 1.1.2. Mai 2011 (2011-05-02), Seiten 1 -16, XP7921281. Die Nachrichten werden zwischen den Teilnehmerstationen des Bussystems, wie Sensor, Steuergerät, Geber, usw., übertragen. Hierbei wird CAN FD derzeit in der Einführungsphase im ersten Schritt meist mit einer Daten-Bitrate von 2Mbit/s bei der Übertragung von Bits des Datenfelds und mit einer Arbitrations-Bitrate von 500kbit/s bei der Übertragung von Bits des Arbitrationsfelds im Fahrzeug eingesetzt.

Über ein solches Bussystem werden immer mehr Informationen ausgetauscht. Insbesondere sollen neben dem reinen Datentransport auch andere Funktionen unterstützt werden, wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem. Dennoch besteht der Wunsch der Anwender, die Datenrate im Bussystem weiter zu steigern, um die Schnelligkeit der Datenübertragung im Bussystem zumindest beizubehalten und möglichst noch weiter zu erhöhen.

Hierfür ist es denkbar, dem Empfangsknoten mitzuteilen, welche Information sich in einem über den Bus gesendeten Rahmen befindet. Bei Classical CAN und CAN FD wird der Inhalt eines Rahmens über einen Rahmenidentifizierer (ID, Frame Identifier) mitgeteilt, welcher auch zur Arbitration verwendet wird. Das geht prinzipiell, weil jede Teilnehmerstation (Knoten) Rahmen mit exklusiven Rahmenidentifizierern sendet. Dieses entspricht einer flachen Zuordnung von Rahmenidentifizierer und Inhalt. Jedoch skaliert eine solche Zuordnung nicht gut und ist nicht flexibel genug.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen.

Insbesondere sollen eine Teilnehmerstation für ein serielles Bussystem und ein Verfahren zur Kommunikation in einem seriellen Bussystem bereitgestellt werden, bei welchen bei großer Flexibilität und mit großer Fehlerrobustheit der Kommunikation eine hohe Datenrate und eine Steigerung der Menge der Nutzdaten pro Rahmen realisiert werden kann.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems, und eine Sende-/Empfangseinrichtung zum Senden eines von der Kommunikationssteuereinrichtung erzeugten Sendesignals auf einen Bus des Bussystems, wobei sich für eine Nachricht, die zwischen Teilnehmerstationen des Bussystems ausgetauscht wird, die Bitzeit eines in der ersten Kommunikationsphase auf den Bus gesendeten Signals unterscheidet von einer Bitzeit eines in der zweiten Kommunikationsphase gesendeten Signals, wobei die Kommunikationssteuereinrichtung ausgestaltet ist, das Sendesignal gemäß einem Rahmen zu erzeugen, in dem zusätzlich zu einem Feld, das die Priorität der Nachricht angibt, ein Feld für einen Datentyp vorgesehen ist, wobei die Kommunikationssteuereinrichtung ausgestaltet ist, in das Feld für den Datentyp einen Wert zu schreiben, der angibt, welche Art von Information sich in einem Datenfeld des Rahmens befindet, wie in Anspruch 1 beschrieben.

Erfindungsgemäß ist die Kommunikationssteuereinrichtung ausgestaltet, das Feld für den Datentyp vor einem Feld für den Datenlängecode des Datenfelds vorzusehen.

Aufgrund der Ausgestaltung der Teilnehmerstation wird in einem Rahmen, der auf dem Bus übertragen wird, um Nachrichten zwischen den Teilnehmerstationen des Bussystems auszutauschen, eine Abstraktionsebene beim Kommunikationsprotokoll eingezogen. Dadurch werden die folgenden zwei Dinge voneinander getrennt, nämlich:
- Datentransport bzw. Datenübertragung auf dem Bus, inkl. Rahmen senden, Fehlerbehandlung usw.
- Zusatzfunktionen wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem, usw.

Damit wird das von der Teilnehmerstation für das Bussystem verwendete Kommunikationsprotokoll, das beispielsweise ein Nachfolge-Kommunikationsprotokoll zu CAN FD, insbesondere ein CAN FX Protokoll, sein kann, einfacher zu verstehen und somit funktional sicherer. Außerdem wird das Kommunikationsprotokoll dadurch modular und damit für die Zukunft einfach erweiterbar, um zusätzliche Funktionen einzufügen, und zwar ohne das Rahmenformat ändern zu müssen. Neue Zusatzfunktionen können in alten Implementierungen mittels Software hinzugefügt werden, so dass die verschiedenen Implementierungen kompatibel bleiben. Somit wird das für das Bussystem verwendete Kommunikationsprotokoll auch sehr flexibel erweiterbar.

Die Ausgestaltung der Teilnehmerstation ermöglicht außerdem, dass das der Typ der übertragenen Information in einem kleinen Feld im Rahmen mitgeteilt wird. Das Protokoll bleibt somit für alle Typen der Informationen unverändert. Dadurch ändert sich durch den Typ der Informationen das Rahmenformat nicht, so dass es nicht erforderlich ist, dass eine Kommunikationssteuereinrichtung jeder Teilnehmerstation verschiedene Typen von Rahmenformaten in Hardware verarbeiten kann, denn es gibt nur ein Rahmenformat.

Als Folge davon kann mit der Teilnehmerstation auch bei Steigerung der Datenrate ein Senden und Empfangen der Rahmen mit großer Flexibilität im Hinblick auf neue Zusatzfunktionen des Bussystems und mit geringer Fehlerquote gewährleistet werden.

Hierbei ist es mit der Teilnehmerstation in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Gemäß einer Variante ist die Kommunikationssteuereinrichtung ausgestaltet, ein Feld für den Datentyp nach einem Feld für den Datenlängecode des Datenfelds vorzusehen.

Gemäß einer speziellen Ausführungsvariante ist die Kommunikationssteuereinrichtung ausgestaltet, das Feld für den Datentyp in dem Sendesignal in einem ersten und/oder zweiten Byte des Datenfelds vorzusehen.

Gemäß einem Ausführungsbeispiel ist die Kommunikationssteuereinrichtung ausgestaltet, bei einem vorbestimmten Wert in dem Feld für den Datentyp zusätzlich in dem Datenfeld mindestens ein Feld für einen Datentyp vorzusehen und in dieses Feld in dem Datenfeld einen Wert zu schreiben, der angibt, welche Art von Information sich in dem Datenfeld des Rahmens befindet. Hierbei kann der vorbestimmte Wert in dem Feld für den Datentyp angeben, dass die Nutzdaten in mehrere Rahmen aufgeteilt sind und dem zusätzlichen Feld für einen Datentyp in dem Datenfeld ein Kopf (Header) vorangestellt ist, dessen Wert die fortlaufende Nummer der Rahmen und die Gesamtzahl der Rahmen angibt, in welche die Nutzdaten aufgeteilt sind.

Möglicherweise umfasst die Art von Information, dass die Nutzdaten Rohdaten aufweisen, oder dass die Nutzdaten einen Ethernet-Rahmen aufweisen, oder dass die Nutzdaten ein Paket eines Internet-Protokolls aufweisen, oder dass zumindest ein Teil des Rahmens mit Crypto-Mechanismen abgesichert ist, oder dass die Nutzdaten Daten zum Aushandeln eines vorbestimmten Parameters zur Kommunikation in dem Bussystem aufweisen, oder dass die Nutzdaten Daten zur Zeitsynchronisation aufweisen, oder dass die Nutzdaten einen Nachrichtenidentifizierer aufweisen, oder dass die Nutzdaten Angaben zur Quelle und zum Ziel der Nachricht aufweisen.

Optional steht der Kommunikationssteuereinrichtung mindestens ein vorbestimmter Wert für einen Datentyp exklusiv zur Verfügung steht, der nicht von anderen Einheiten der Teilnehmerstation gesendet werden darf.

Die Teilnehmerstation kann zudem einen Protokoll-Erweiterungs-Block aufweisen, der zur Auswertung des Felds für den Datentyp und des optional vorhandenen zusätzlichen Felds für einen Datentyp in den Nutzdaten und zur Ausführung der erforderlichen Behandlung der Nachricht auf der Grundlage eines Auswerteergebnisses ausgestaltet ist. Hierbei kann der Protokoll-Erweiterungs-Block mindestens ein Modul aufweisen, welches die Auswertung und die Ausführung der erforderlichen Behandlung der Nachricht ausführt. Alternativ oder zusätzlich sind/ist die Auswertung und/oder die Ausführung der erforderlichen Behandlung der Nachricht mittels Hardware ausführbar. Alternativ oder zusätzlich sind/ist die Auswertung und/oder die Ausführung der erforderlichen Behandlung der Nachricht mittels Software ausführbar, die auf einem Mikrocontroller der Teilnehmerstation abläuft.

Denkbar ist, dass der für die Nachricht gebildete Rahmen kompatibel zu CAN FD aufgebaut ist.

Möglich ist, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 15 gelöst. Das Verfahren wird mit einer Teilnehmerstation des Bussystems ausgeführt, die eine Kommunikationssteuereinrichtung und eine Sende-/Empfangseinrichtung aufweist, wobei das Verfahren die Schritte aufweist, wie in Anspruch 15 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein Schaubild zur Veranschaulichung des Aufbaus einer Nachricht, die von einer Teilnehmerstation des Bussystems gemäß einer Modifikation des ersten Ausführungsbeispiels gesendet werden kann;
Fig. 4 ein vereinfachtes schematisches Blockschaltbild einer Teilnehmerstation des Bussystems gemäß dem ersten Ausführungsbeispiel;
Fig. 5 einen zeitlichen Verlauf von Bussignalen CAN_H und CAN_L, die bei der Teilnehmerstation gemäß dem ersten Ausführungsbeispiel Bussignale CAN-FX_H und CAN-FX_L sind;
Fig. 6 einen zeitlichen Verlauf einer Differenzspannung VDIFF der Bussignale CAN-FX_H und CAN-FX_L bei der Teilnehmerstation gemäß dem ersten Ausführungsbeispiel;
Fig. 7A bis Fig. 7E ein Schaubild zur Veranschaulichung des Aufbaus von Nachrichten gemäß Fig. 2 mit verschiedenen Datentypen;
Fig. 8 ein Schaubild zur Veranschaulichung des Aufbaus einer segmentierten Nachricht gemäß Fig. 2;
Fig. 9 ein Schaubild zur Veranschaulichung des Aufbaus einer Nachricht, die von einer Teilnehmerstation des Bussystems gemäß einem dritten Ausführungsbeispiel gesendet werden kann; und
Fig. 10 ein Schaubild zur Veranschaulichung des Aufbaus einer Nachricht, die von einer Teilnehmerstation des Bussystems gemäß einem vierten Ausführungsbeispiel gesendet werden kann.

In den Figuren sind gleiche oder funktionsgleiche Elemente, sofern nichts anderes angegeben ist, mit denselben Bezugszeichen versehen.

### Beschreibung der Ausführungsbeispiele

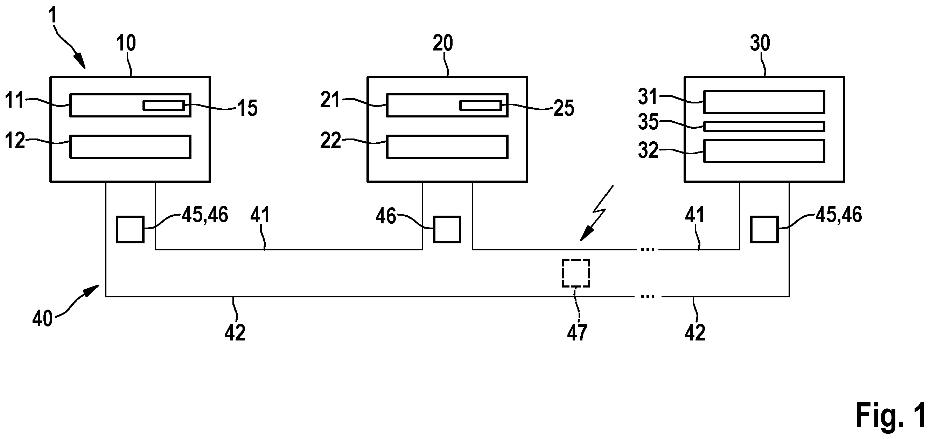

Fig. 1 zeigt als Beispiel ein Bussystem 1, das insbesondere grundlegend für ein CAN-Bussystem, ein CAN FD-Bussystem, ein CAN FX-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-FX_H und CAN-FX_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und eine Prüfsummeneinheit 15. Die Teilnehmerstation 20 hat eine Kommunikationssteuereinrichtung 21 eine Sende-/Empfangseinrichtung 22 und eine Prüfsummeneinheit 25. Die Teilnehmerstation 30 hat eine Kommunikationssteuereinrichtung 31, eine Sende-/Empfangseinrichtung 32 und eine Prüfsummeneinheit 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

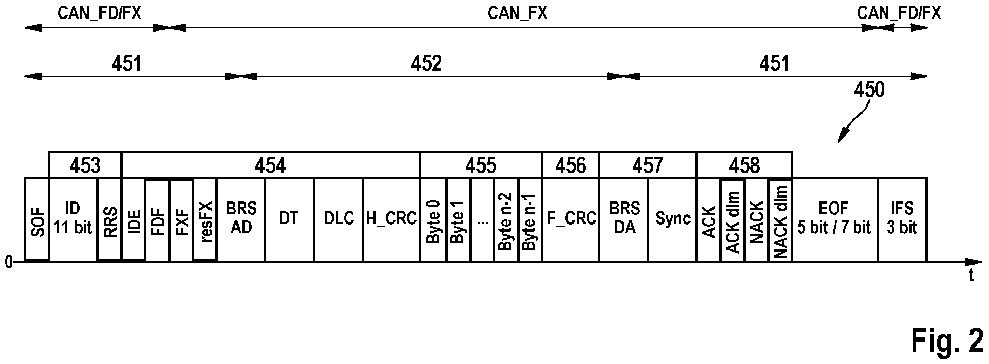

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN FX-Formats aufgebaut, das in Bezug auf Fig. 2 detaillierter beschrieben ist, und bei welchem die jeweilige Prüfsummeneinheit 15, 35 zum Einsatz kommt. Die Kommunikationssteuereinrichtungen 11, 31 können zudem ausgeführt sein, um je nach Bedarf eine CAN FX-Nachricht 45 oder eine CAN FD-Nachricht 46 für die Sende-/Empfangseinrichtungen 12, 32 bereitzustellen oder von dieser zu empfangen. Auch hierbei kommen die jeweiligen Prüfsummeneinheiten 15, 35 zum Einsatz. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN FX oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN CAN-Controller oder ein CAN FD Controller. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachrichtübertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN FX-Format oder Nachrichten 46 gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN FX Format sowie der Empfang solcher Nachrichten 45 realisierbar.

Fig. 2 zeigt für die Nachricht 45 einen CAN FX Rahmen 450, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN FX-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat ein Arbitrationsfeld 453, ein Steuerfeld 454, ein Datenfeld 455, ein Prüfsummenfeld 456 für eine Prüfsumme F_CRC, ein Synchronisationsfeld 457 und ein Bestätigungsfeld 458.

In der Arbitrationsphase 451 wird mit Hilfe eines Identifizierers (ID) in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-FX-Rahmens bzw. der Nachricht 45 aus dem Datenfeld 455 sowie das Prüfsummenfeld 456 für die Prüfsumme F_CRC gesendet.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN FX im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 4kbyte.

Wie in Fig. 2 dargestellt, verwendet die Teilnehmerstation 10 in der Arbitrationsphase 451 als erster Kommunikationsphase teilweise, insbesondere bis zum FDF-Bit (inklusive), ein von CAN/CAN-FD bekanntes Formatgemäß der ISO11898-1:2015. Dagegen verwendet die Teilnehmerstation 10 ab dem FDF-Bit in der ersten Kommunikationsphase sowie in der zweiten Kommunikationsphase, der Datenphase 452, ein CAN FX Format, das nachfolgend beschrieben ist.

Bei dem vorliegenden Ausführungsbeispiel sind CAN FX und CAN FD kompatibel. Hierbei wird das von CAN FD bekannte res-Bit, das nachfolgend FXF-Bit genannt ist, für die Umschaltung von dem CAN FD Format zu dem CAN FX Format genutzt. Daher sind die Rahmenformate von CAN FD und CAN FX bis zum res-Bit gleich. Eine CAN FX Teilnehmerstation, also hier die Teilnehmerstationen 10, 30, unterstützt auch CAN FD.

Alternativ zu dem in Fig. 2 gezeigten Rahmen 450, bei welchem ein Identifizierer (Identifier) mit 11 Bit verwendet wird, ist optional ein CAN FX Erweitertes Rahmenformat möglich, bei dem ein Identifizierer (Identifier) mit 29 Bit verwendet wird. Dies ist bis zum FDF-Bit identisch zu dem bekannten CAN FD Erweiterten Rahmenformat aus der ISO11898-1:2015.

Gemäß Fig. 2 ist der Rahmen 450 vom SOF-Bit bis einschließlich zum FDF-Bit identisch zum CAN FD Base Frame Format gemäß der ISO11898-1:2015. Daher wird der bekannte Aufbau hier nicht weiter erläutert. Bits, die an ihrer unteren Linie in Fig. 2 mit einem dicken Strich dargestellt sind, werden in dem Rahmen 450 als dominant gesendet. Bits, die an ihrer oberen Linie in Fig. 2 mit einem dicken Strich dargestellt sind, werden in dem Rahmen 450 als rezessiv gesendet.

Allgemein werden bei der Erzeugung des Rahmens 450 zwei unterschiedliche Stuffing-Regeln angewendet. Bis zum FXF-Bit im Steuerfeld 454 gilt die dynamische Bit-Stuffing-Regel von CAN FD, so dass nach 5 gleichen Bits in Folge ein inverses Stuff-Bit einzufügen ist. Nach einem FX-Bit im Steuerfeld 454 gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden.

In dem Rahmen 450 folgt direkt nach dem FDF-Bit das FXF-Bit, das von der Position her dem "res Bit" im CAN FD Base Frame Format entspricht, wie zuvor erwähnt. Wird das FXF-Bit als 1, also rezessiv, gesendet, identifiziert es damit den Rahmen 450 als CAN FX-Rahmen. Für einen CAN FD Rahmen setzt die Kommunikationssteuereinrichtung 11 das FXF-Bit als 0, also dominant.

Nach dem FXF-Bit folgt in dem Rahmen 450 ein resFX-Bit, das ein dominantes Bit für die zukünftige Nutzung ist. Das resFX muss für den Rahmen 450 als 0, also dominant, gesendet werden. Empfängt die Teilnehmerstation 10 jedoch ein resFX-Bit als 1, also rezessiv, geht die empfangende Teilnehmerstation 10 beispielsweise in einen Protokollausnahmezustand (Protocoll Exception State), so wie es bei einer CAN FD Nachricht 46 für ein res=1 ausgeführt wird. Das resFX-Bit könnte auch genau umgekehrt definiert sein, also, dass es als 1, also rezessiv, gesendet werden muss, so dass die empfangende Teilnehmerstation bei einem dominanten resFX-Bit in den Protokollausnahmezustand geht.

Nach dem resFXF-Bit folgt in dem Rahmen 450 eine Sequenz BRS AD, in welcher eine vorbestimmte Bitsequenz codiert wird. Diese Bitsequenz erlaubt eine einfache und sichere Umschaltung von der Arbitrations-Bitrate der Arbitrationsphase 451 zu der Daten-Bitrate der Datenphase 452. Beispielsweise besteht die Bitsequenz der BRS AD aus einem rezessiven Arbitrations-Bit gefolgt von einem dominanten Daten-Bit. Bei diesem Beispiel kann die Bitrate an der Flanke zwischen den zwei genannten Bits umgeschaltet werden.

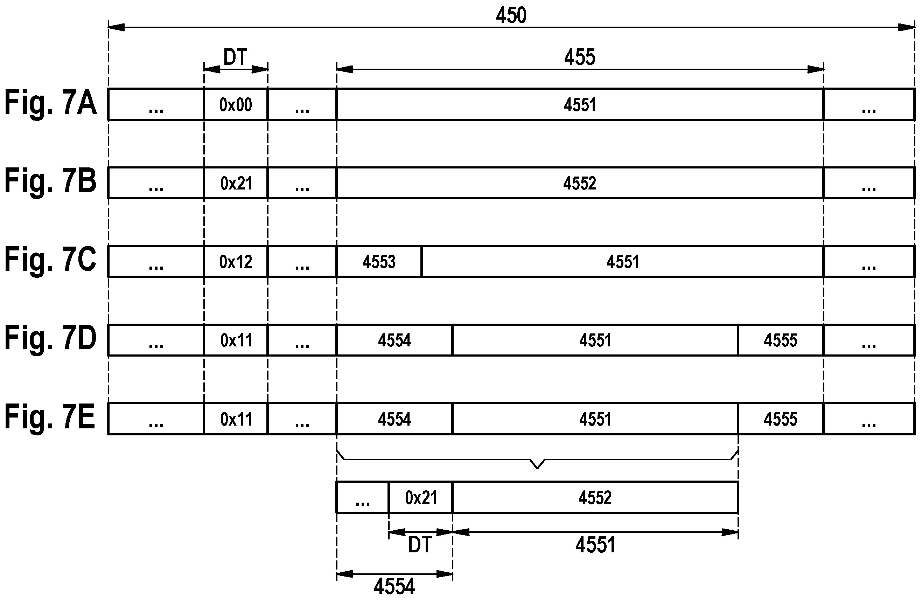

Nach der Sequenz BRS AD folgt in dem Rahmen 450 ein DT-Feld, in welchem der Datentyp (Data Type = DT) der Nutzdaten des Datenfelds 455 angegeben ist, das nachfolgend noch genauer beschrieben ist. Das DT-Feld hat eine Länge von beispielsweise 1 Byte; damit lassen sich 2⁸ = 256 verschiedene Datentypen (Data Types) definieren. Selbstverständlich ist eine andere Länge für das DT-Feld wählbar. Der Datentyp (Data Type) kennzeichnet den Inhalt des Datenfeldes 455 im Hinblick darauf, welche Art von Information im Datenfeld 455 enthalten ist. Je nach Wert im DT-Feld werden im Datenfeld 455 auch noch zusätzliche Header oder Trailer übertragen, die neben den eigentlichen Nutzdaten (User Data) vorgesehen sind, wie nachfolgend genauer anhand von Fig. 7A bis Fig. 7E beschrieben. Alternativ ist das DT-Feld am Anfang des Datenfeldes 455, also z.B. im ersten Byte des Datenfeldes 455 angeordnet.

Nach dem DT-Feld folgt in dem Rahmen 450 ein DLC-Feld, in welchem der Datenlängencode (DLC = Data Length Code) eingefügt wird, welcher die Anzahl der Bytes im Datenfeld 455 des Rahmens 450 angibt. Der Datenlängencode (DLC) kann jeden Wert von 1 bis zur maximalen Länge des Datenfelds 455 bzw. Datenfeldlänge annehmen. Beträgt die maximale Datenfeldlänge insbesondere 2048 Bit, benötigt der Datenlängencode (DLC) eine Anzahl von 11 Bits unter den Annahmen, dass DLC = 0 eine Datenfeldlänge mit einer Anzahl von 1 Byte bedeutet und DLC = 2047 eine Datenfeldlänge mit einer Anzahl von 2048 Byte Datenfeldlänge bedeutet. Alternativ könnte ein Datenfeld 455 der Länge 0 erlaubt sein, wie beispielsweise bei CAN. Hierbei würde DLC = 0 beispielsweise die Datenfeldlänge mit der Anzahl von 0 Bytes codieren. Die maximale codierbare Datenfeldlänge ist mit beispielsweise 11 Bit dann (2^11)-1 = 2047.

Nach dem DLC-Feld folgt in dem Rahmen 450 eine Kopfprüfsumme H_CRC. Die Kopfprüfsumme ist eine Prüfsumme zur Absicherung des Kopfes (Headers) des Rahmens 450, das heißt aller Bits vom Beginn des Rahmens 450 mit dem SOF-Bit bis zum Beginn der Kopfprüfsumme H_CRC, inklusive aller dynamischen und optional der fixed Stuff-Bits bis zum Beginn der Kopfprüfsumme H_CRC. Die Länge der Kopfprüfsumme H_CRC und damit des Prüfsummen-Polynoms gemäß der zyklischen Redundanzprüfung (CRC) ist entsprechend der gewünschten Hamming-Distanz zu wählen. Das von der Kopfprüfsumme H_CRC abzusichernde Datenwort ist bei einem Datenlängencode (DLC) von 11 Bit länger als 27 Bit. Daher muss das Polynom der Kopfprüfsumme H_CRC, um eine Hamming-Distanz von 6 zu erreichen, mindestens 13 Bit lang sein. Die Berechnung der Kopfprüfsumme H_CRC wird nachfolgend noch genauer beschrieben.

Nach der Kopfprüfsumme H_CRC folgt in dem Rahmen 450 das Datenfeld 455 (Data Field). Das Datenfeld 455 besteht aus 1 bis n Daten-Bytes, wobei n beispielsweise 2048 Byte oder 4096 Byte oder ein beliebiger anderer Wert ist. Alternativ ist eine Datenfeldlänge von 0 denkbar. Die Länge des Datenfelds 455 ist in dem DLC-Feld codiert, wie zuvor beschrieben. Wie zuvor beschrieben, ist optional das DT-Feld am Anfang des Datenfeldes 455, also z.B. im ersten Byte des Datenfeldes 455 angeordnet.

Nach dem Datenfeld 455 folgt in dem Rahmen 450 eine Rahmenprüfsumme F_CRC. Die Rahmenprüfsumme F_CRC besteht aus den Bits der Rahmenprüfsumme F_CRC. Die Länge der Rahmenprüfsumme F_CRC und damit des CRC Polynoms ist entsprechend der gewünschten Hamming-Distanz zu wählen. Die Rahmenprüfsumme F_CRC sichert den gesamten Rahmen 450 ab. Alternativ ist optional nur das Datenfeld 455 mit der Rahmenprüfsumme F_CRC abgesichert. Die Berechnung der Rahmenprüfsumme F_CRC wird nachfolgend noch genauer beschrieben.

Nach der Rahmenprüfsumme F_CRC folgt in dem Rahmen 450 eine Sequenz BRS DA, in welcher eine vorbestimmte Bitsequenz codiert wird. Diese Bitsequenz erlaubt eine einfache und sichere Umschaltung von der Daten-Bitrate der Datenphase 452 zu der Arbitrations-Bitrate der Arbitrationsphase 451. Beispielsweise besteht die Bitsequenz der BRS DA aus einem rezessiven Daten-Bit, gefolgt von einem dominanten Arbitrations-Bit. Bei diesem Beispiel kann an der Flanke zwischen den zwei genannten Bits die Bitrate umgeschaltet werden.

Nach der Sequenz BRS DA folgt in dem Rahmen 450 ein Sync-Feld, in dem ein Synchronisationsmuster (Sync Pattern) vorgehalten ist. Das Synchronisationsmuster ist ein Bitmuster, das einer empfangenden Teilnehmerstation 10, 30 erlaubt, den Beginn der Arbitrationsphase 451 nach der Datenphase 452 zu erkennen. Das Synchronisationsmuster erlaubt empfangenden Teilnehmerstation 10, 30, die beispielsweise aufgrund einer falschen Kopfprüfsumme H_CRC die korrekte Länge des Datenfelds 455 nicht kennen, sich aufzusynchronisieren. Anschließend können diese Teilnehmerstationen ein "Negativ Acknowledge" senden, um den fehlerhaften Empfang mitzuteilen. Dies ist insbesondere dann sehr wichtig, wenn CAN FX im Datenfeld 455 keine Fehlerrahmen 47 (Error Flags) mehr erlaubt.

Nach dem Sync-Feld folgt in dem Rahmen 450 ein Bestätigungsfeld (ACK Field), das aus mehreren Bits besteht, nämlich bei dem Beispiel von Fig. 2 einem ACK-Bit, einem ACK-dlm-Bit, einem NACK-Bit und einem NACK-dlm-Bit Bit. Das NACK-Bit und das NACK-dlm-Bit sind optionale Bits. Das ACK-Bit senden die empfangenden Teilnehmerstation 10, 30 als dominant, wenn sie den Rahmen 450 korrekt empfangen haben. Die sendende Teilnehmerstation sendet das ACK-Bit als rezessiv. Daher kann das ursprünglich in dem Rahmen 450 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450 auf dem Bus 40 signalisieren kann. Die Funktion der Bits ist wie die des ACK-Bits und des ACK-dlm-Bits.

Nach dem Bestätigungsfeld (ACK Field) folgt in dem Rahmen 450 ein Endefeld (EOF = End of Frame). Die Bitsequenz des Endefelds (EOF) dient dazu, das Ende des Rahmens 450 zu kennzeichnen. Das Endefeld (EOF) sorgt dafür, dass am Ende des Rahmens 450 eine Anzahl von 8 rezessiven Bits gesendet wird. Das ist eine Bitfolge, die innerhalb des Rahmens 450 nicht auftreten kann. Dadurch kann von den Teilnehmerstationen 10, 20, 30 das Ende des Rahmens 450 sicher erkannt werden.

Das Endefeld (EOF) hat eine Länge, die abhängig davon unterschiedlich ist, ob im NACK-Bit ein dominantes Bit oder ein rezessives Bit gesehen wurde. Wenn die sendende Teilnehmerstation das NACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in dem Rahmen 450 ein Zwischenrahmenabstand (IFS - Inter Frame Space). Dieser Zwischenrahmenabstand (IFS) ist ausgestaltet wie bei CAN FD entsprechend der ISO11898-1:2015.

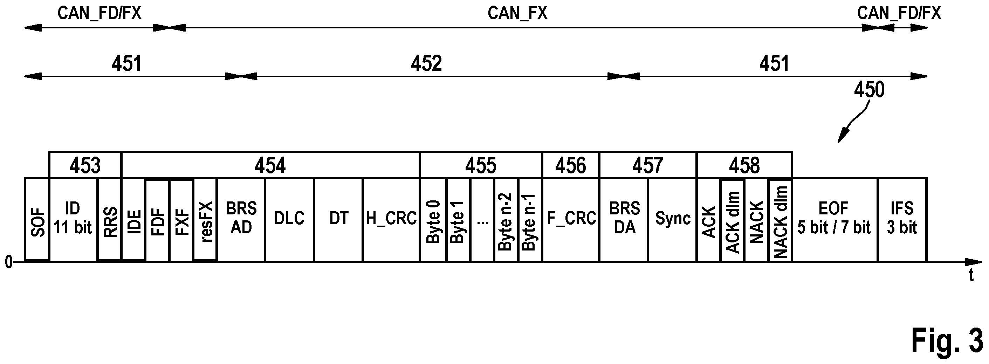

Fig. 2 gibt ein spezielles Beispiel für die Reihenfolge der Unterteilungen des Headers an. Alternativ ist die Reihenfolge der Unterteilungen des Headers anders sortierbar. Zum Beispiel kann das DLC-Feld vor dem DT-Feld angeordnet sein, wie in Fig. 3 als Modifikation des vorliegenden Ausführungsbeispiels gezeigt.

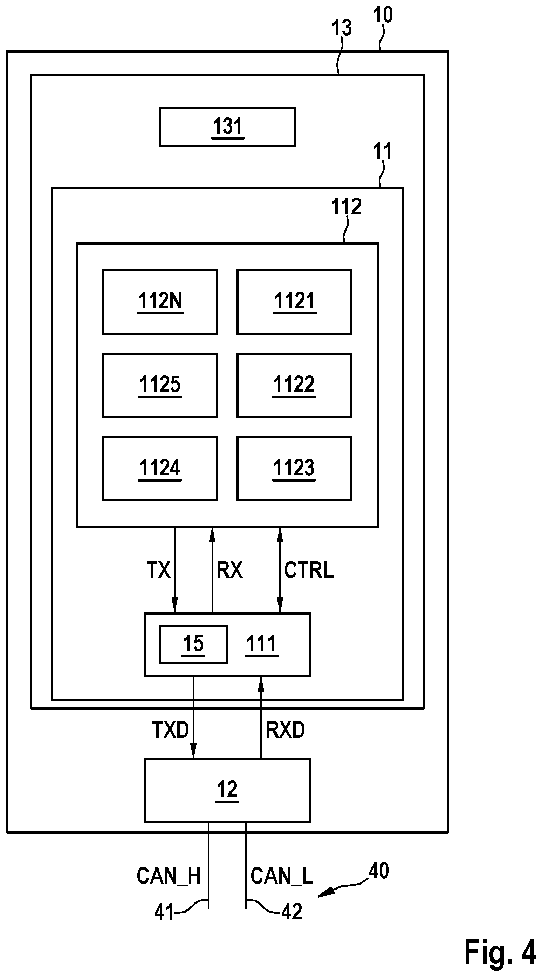

Fig. 4 zeigt den grundlegenden Aufbau der Teilnehmerstation 10 mit der Kommunikationssteuereinrichtung 11, der Sende-/Empfangseinrichtung 12 und der Prüfsummeneinheit 15, die Teil der Kommunikationssteuereinrichtung 11, genauer gesagt ihres Protokoll-Controllers 111 ist. Zudem hat die Kommunikationssteuereinrichtung 11 einen Protokoll-Erweiterungs-Block 112, mit mindestens einem jedoch insbesondere einer Vielzahl von Erweiterungsmodulen 1121 bis 112N, wie beispielsweise ein Nachrichtenverwaltungsmodul 1121, ein Zeitsynchronisationsmodul 1122, ein CANsec-Modul 1123, ein Empfangssignalfiltermodul 1124, ein Sendesignalfiltermodul 1125, usw. Es sind beliebig viele die Module oder andere Module vorsehbar und einsetzbar.

Die Teilnehmerstation 30 ist in ähnlicher Weise aufgebaut, wie in Fig. 3 gezeigt, jedoch ist die Prüfsummeneinheit 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 4 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist und der eine zentrale Verarbeitungseinheit (Central Processing Unit = CPU) 131 aufweist. Zusätzlich ist üblicherweise eine nicht dargestellte Energieversorgungseinrichtung eingebaut, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern. Zusätzlich oder alternativ kann die Energieversorgungseinrichtung als Stromquelle ausgestaltet sein.

Die Kommunikationssteuereinrichtung 11 ist für die Implementierung der CAN FX-Funktionen zuständig.

In dem Protokoll-Erweiterungs-Block 112 sind alle höherwertigen Protokoll-Erweiterungsfunktionen zusammengefasst. Die Funktionen können modular, also von den einzelnen Modulen 1121 bis 112N implementiert werden. Die Protokollerweiterungen bzw. Protokoll-Erweiterungsfunktionen (Protocol Extensions) können somit leicht ergänzt werden und haben keine Rückwirkung auf den Protokoll-Controller 111. Die Protokollerweiterungen können prinzipiell alternativ oder zusätzlich in Software implementiert werden, die dann auf der zentralen Verarbeitungseinheit 131 des Mikrocontrollers 13 ausgeführt wird. Zwischen dem Protokoll-Controllers 111 und dem Protokoll-Erweiterungs-Block 112 ist ein Signal CRTL austauschbar, mit welchem das Senden und Empfangen gesteuert werden kann.

Beispielsweise speichert das Nachrichtenverwaltungsmodul 1121 (Message Handler) eine begrenzte Anzahl zu sendender und empfangener Nachrichten 45. Der notwendige Speicher, in dem die Nachrichten 45 abgelegt werden, kann alternativ außerhalb der Kommunikationssteuereinrichtung 11 angeordnet sein, wobei die Zustandsinformationen, also z.B. ob eine Nachricht 45 gespeichert ist, im Nachrichtenverwaltungsmodul 1121 gespeichert ist. Gegebenenfalls kann das Nachrichtenverwaltungsmodul 1121 auch Nachrichten 45 aufgeteilt auf mehrere kleinere Rahmen 450 senden und Nachrichten 45 aufgeteilt auf mehrere kleinere Rahmen 450 empfangen - d.h. die Teile der Nachricht 45 einer Nachricht zuordnen.

Beispielsweise führt das Zeitsynchronisationsmodul 1122 (TimeSync) die Zeitsynchronisation autark durch und sendet und empfängt dazu CAN FX Nachrichten 45. Die Informationen stellt das Zeitsynchronisationsmodul 1122 der zentralen Verarbeitungseinheit 131 bereit.

Beispielsweise sichert das CANsec-Modul 1123 bei Bedarf Nachrichten 45 mit kryptographischen Methoden ab.

Beispielsweise kann das Empfangssignalfiltermodul 1124 eingehende Nachrichten 45 filtern, um die zentrale Verarbeitungseinheit 131 zu entlasten.

Beispielsweise kann das Sendesignalfiltermodul 1125 den einzelnen Nachrichten 45 eine Priorität-ID (ID zur Arbitration) zuteilen und diese dynamisch anpassen. Zudem kann das Sendesignalfiltermodul 1125 optional dafür sorgen, dass eine zu sendende Nachricht 45 vom CANsec-Modul kryptographisch abgesichert wird, bevor die Nachricht dann verschlüsselt gesendet wird.

Die Prüfsummeneinheit 15 berechnet die zuvor beschriebene Rahmenprüfsumme F_CRC und die zuvor beschriebene Kopfprüfsumme H_CRC.

Die Sende-/Empfangseinrichtung 12 hat einen nicht dargestellten Sender und einen Empfänger. Auch wenn nachfolgend immer von der Sende-/Empfangseinrichtung 12 gesprochen ist, ist es alternativ möglich, den Empfänger in einer separaten Einrichtung extern von dem Sender vorzusehen. Der Sender und der Empfänger können wie bei einer herkömmlichen Sende-/Empfangseinrichtung 22 aufgebaut sein.

Die Sende-/Empfangseinrichtung 12 ist an den Bus 40 angeschlossen, genauer gesagt dessen erste Busader 41 für CAN_H oder CAN-FX_H und dessen zweite Busader 42 für CAN_L oder CAN-FX_L.

Im Betrieb des Bussystems 1 setzt der Sender der Sende-/Empfangseinrichtung 12 ein Sendesignal TXD der Kommunikationssteuereinrichtung 11 in entsprechende Signale CAN-FX_H und CAN-FX_L für die Busadern 41, 42 um und sendet diese Signale CAN-FX_H und CAN-FX_L an den Anschlüssen für CAN_H und CAN_L auf den Bus 40. Die Sende-/Empfangseinrichtung 12 implementiert die Schicht 1 des bekannten OSI-Modells, das heißt die Sende-/Empfangseinrichtung 12 codiert die einzelnen zu sendenden Bits physikalisch auf dem Bus 40, beispielsweise als eine Differenzspannung VDIFF = CAN-FX_H - CAN-FX_L.

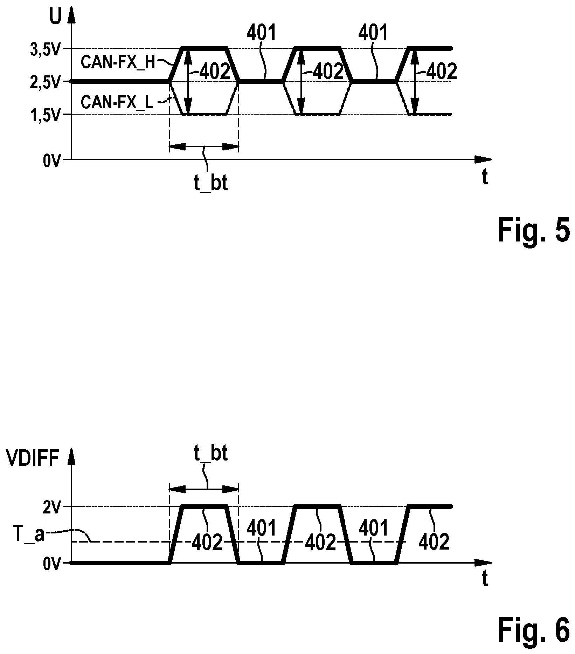

Der Empfänger der Sende-/Empfangseinrichtung 12 bildet aus von Bus 40 empfangenen Signalen CAN-FX_H und CAN-FX_L gemäß Fig. 5 ein Empfangssignal RXD und gibt dieses an die Kommunikationssteuereinrichtung 11 weiter, wie in Fig. 4 gezeigt. Mit Ausnahme eines Leerlauf- oder Bereitschaftszustands (Idle oder Standby), hört die Sende-/Empfangseinrichtung 12 mit dem Empfänger im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

Gemäß dem Beispiel von Fig. 5 haben die Signale CAN-FX_H und CAN-FX_L zumindest in der Arbitrationsphase 451 die dominanten und rezessiven Buspegel 401, 402, wie von CAN bekannt. Auf dem Bus 40 bildet sich ein Differenzsignal VDIFF = CAN-FX_H - CAN-FX_L aus, das in Fig. 6 gezeigt ist. Die einzelnen Bits des Signals VDIFF mit der Bitzeit t_bt können mit einer Empfangsschelle von 0,7 V erkannt werden. In der Datenphase 452 werden die Bits der Signale CAN-FX_H und CAN-FX_L schneller, also mit einer kürzeren Bitzeit t_bt, gesendet als in der Arbitrationsphase 451. Somit unterscheiden sich die Signale CAN-FX_H und CAN-FX_L in der Datenphase 452 zumindest in deren höheren Bitrate von den herkömmlichen Signalen CAN_H und CAN_L.

Die Abfolge der Zustände 401, 402 für die Signale CAN-FX_H, CAN-FX_L in Fig. 4 und der daraus resultierende Verlauf der Spannung VDIFF von Fig. 6 dient nur der Veranschaulichung der Funktion der Teilnehmerstation 10. Die Abfolge der Datenzustände für die Buszustände 401, 402 ist je nach Bedarf wählbar.

Mit anderen Worten erzeugt der Sender der Sende-/Empfangseinrichtung 12 in einer ersten Betriebsart gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet der Sender der Sende-/Empfangseinrichtung 12, für die zeitlichen Verläufe der Signale CAN-FX_H, CAN-FX_L in einer zweiten Betriebsart, welche die Datenphase 452 umfasst, die Bits mit einer höheren Bitrate auf den Bus 40. Die CAN-FX_H und CAN-FX_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD.

Beispiele für verschiedene Datentypen sind in Fig. 7A bis Fig. 7E in dem DT-Feld gezeigt und nachfolgend angegeben. Die nachfolgenden Beispiele verdeutlichen, wozu das DT-Feld beispielsweise verwendet werden kann:
In Fig. 7A ist in dem DT-Feld eines Rahmens 450 der Wert 0x00 enthalten, was einen normalen CAN FX Rahmen 450 bezeichnet, in dem im Datenfeld 455 Rohdaten als Nutzdaten 4551 enthalten sind. Der Rahmen 450 hat keine Erweiterungen und ist daher so aufgebaut, wie es bei Classical CAN und CAN FD üblich ist. Dieser Datentyp ist besonders für die Anwender interessant, die CAN FX nur wegen der höheren Bitrate und der großen möglichen Datenfeldlänge einsetzen.

Außerdem kann in dem DT-Feld eines Rahmens 450 der Wert 0x01 bis 0x0F enthalten sein, was Management-Nachrichten innerhalb des CAN FX Netzwerks bezeichnet, wobei das Bussystem 1 ein Teil des CAN FX Netzwerks ist. Rahmen 450 mit einem solchen Wert bzw. Datentyp im DT-Feld können nur die Kommunikationssteuereinrichtungen 11, 31 (CAN FX Controller) autark bzw. exklusiv senden. Der Kommunikationssteuereinrichtungen 11, 31 steht mindestens einer dieser Werte 0x01 bis 0x0F exklusiv zur Verfügung. Das heißt, die Software auf dem Mikrocontroller 13 oder eine sonstige Einheit der Teilnehmerstation 10, 30 kann den CAN FX Controller 11 nicht anweisen, einen Rahmen 450 mit einem solchen Wert bzw. Datentyp im DT-Feld zu senden. Ein Anwendungsfall davon ist eine Auto-Aushandlung (Auto-Negotiation), bei welcher die CAN FX-Controller bzw. die Kommunikationssteuereinrichtungen 11 etwas aushandeln am Bus 40, wie beispielsweise eine Bitrate oder andere Parameter zur Kommunikation im Bussystem 1. Ein anderer Anwendungsfall ist eine Zeitsynchronisation, bei welcher der CAN FX Controller bzw. die Kommunikationssteuereinrichtung 11 Rahmen für die Zeitsynchronisation senden und empfangen kann. Beispielsweise steht der Datentyp DT = 0x04 für eine Synchronisations-Nachricht für die Zeitsynchronisierung. Rahmen 450 mit diesen Datentypen DT müssen nicht an den Nutzer, das heißt zur zentralen Verarbeitungseinheit (CPU), weitergereicht werden, sondern können ausgefiltert werden.

Außerdem kann in dem DT-Feld eines Rahmens 450 der Wert 0x10 enthalten sein, was segmentierte CAN FX Rahmen 450 bezeichnet. Prinzipiell kann die sendende Teilnehmerstation eine Nachricht 45 anstatt in einem Rahmen 450 mit langem Datenfeld 455 auch in mehreren Rahmen 450 mit kürzerem Datenfeld 455 senden. Das entspricht dem Verhalten eines einfachen Transportprotokolls. Kürzere Rahmen 450 verkürzen die notwendigen Wartezeiten für andere Rahmen 450 mit höherer Priorität und somit erhöht sich die Echtzeitfähigkeit.

Der Empfänger des Rahmens 450 erkennt am DT-Feld = 0x10, dass dies nur ein Teil einer Nachricht 45 ist. Am Anfang des Datenfeldes 455 ist ein Segmentkopf (Segment-Header), der folgende Information enthält: das wievielte Segment (Teil) der Nachricht dieser Rahmen 450 überträgt, wie viele Segmente es insgesamt gibt, und den Datentyp DT für den Inhalt der Nachricht 45.

In Fig. 7B ist in dem DT-Feld eines Rahmens 450 der Wert 0x21 enthalten, was ein Ethernet Tunneling bezeichnet. Eines der beabsichtigten Anwendungsfelder von CAN FX ist das Tunneln, das heißt transparentes Weiterleiten, von Ethernet Rahmen 4552. Daher befindet sich im Datenfeld 455 ein Ethernet Rahmen 4552, das heißt genauer gesagt, alle Felder des Ethernet Rahmens 4552 beginnend mit der "Destination MAC Address" bis zur "Payload" inklusive, gemäß dem Ethernet-Protokoll.

In Fig. 7C ist in dem DT-Feld eines Rahmens 450 der Wert 0x12 enthalten, was einen Nachrichtenidentifizierer (Message ID) 4553 bezeichnet. Dies bedeutet, dass ein Nachrichtenidentifizierer 4553 in den ersten 4 Byte des Datenfeldes 455 abgelegt ist. Dies ist vorteilhaft, da CAN FX zur Erhöhung der Nettodatenrate nur eine kurze ID in der Arbitrationsphase 451 hat. Die bei CAN gebräuchlichen "RX Message Filter" können nun bei empfangenen Rahmen mit DT=0x12 auf den Nachrichtenidentifizierer 4553 filtern. Bei Rahmen 450 mit einem anderen Datentyp DT ist es vorteilhaft, auf die von dem Datentyp DT bereitgestellten Felder zu filtern. Diese Felder sind beliebig wählbar. Ein generelles Filtern auf die ersten 4 Byte im Datenfeld 455, ohne den Datentyp DT im DT-Feld zu betrachten, ist nicht sinnvoll.

In Fig. 7D ist in dem DT-Feld eines Rahmens 450 der Wert 0x11 enthalten, was einen CAN-Sicherheitsrahmen (CANsec =CAN Security) bezeichnet. Ein solcher CAN-Sicherheitsrahmen bedeutet, dass Teile des Datenfeldes 455 und sonstiger Felder des Rahmens 455 mit Crypto-Mechanismen abgesichert sind. Beispielsweise befindet sich ein Sicherheitskopf (Security-Header) 4554 am Anfang des Datenfeldes 455. Der Sicherheitskopf 4554 enthält Informationen über die Art der getroffenen Sicherheitsmaßnahme, insbesondere ob die Integrität der Nachricht 45 durch eine Signatur bzw. Message Authentication Code geschützt wird, oder ob das Datenfeld 455 verschlüsselt ist, um die Vertraulichkeit zu wahren, oder ob beide Sicherheitsmaßnahmen verwirklicht sind. Zudem kann Information zum verwendeten Schlüssel, z.B. Schlüssel 17 und/oder Information zum Kommunikationskanal und zur Paketnummer enthalten sein. Beispielsweise steht ein Sicherheitsschlussteil (Security Trailer) 4555 mit einer Signatur in den letzten 4 Bytes des Datenfeldes 455, wenn die Option Signieren im Sicherheitskopf 4554 gesetzt ist. Ansonsten fehlt der Sicherheitsschlussteil 4555.

Außerdem kann in dem DT-Feld eines Rahmens 450 der Wert 0x13 enthalten sein, was CAN FX Rahmen 450 mit Quelle- und Ziel-Identifizierer (Source and Destination ID) bezeichnet. Ein Quellenidentifizierer und ein Zielidentifizierer sind in den ersten Bytes des Datenfeldes 455 abgelegt. Das bildet die bei Ethernet-Rahmen enthaltene Quellenadresse und die Zieladresse nach. Die bei CAN gebräuchlichen Empfangssignalfilter 1124 (RX Message Filter) können nun bei empfangenen Rahmen 450 mit der Datentyp DT=0x13 auf den Quellenidentifizierer und Zielidentifizierer filtern.

Außerdem kann in dem DT-Feld eines Rahmens 450 der Wert 0x20 enthalten sein, was beispielsweise CAN FX Rahmen 450 mit Internet Protokoll, Version 4 bezeichnet. Bei solchen Rahmen 450 befindet sich im Datenfeld 455 ein Paket des Internet Protokolls der Version 4. Selbstverständlich sind beliebige Pakete gemäß anderen Protokollen möglich, je nachdem wie die Datentypen DT festgelegt sind. Das Internet Protokoll wird auch in fahrzeuginternen Netzwerken immer häufiger eingesetzt.

Wie zuvor im Zusammenhang mit Fig. 2 beschrieben, gibt der Datenlängecode (DLC) der Nachricht 45 jeweils die Länge des Datenfeldes 455 an, was der Länge der Nutzdaten inklusive eventueller weiterer Köpfe (Header) 4554 oder Schlussteile (Trailer) 4555 aufgrund des verwendeten Datentyps DT entspricht. Es wäre alternativ möglich, mit dem Datenlängecode (DLC) nur die Länge der Nutzdaten zu codieren, so wie es bei Ethernet ausgeführt wird. Dies hat jedoch den Nachteil, dass der CAN FX Protokoll Controller bzw. die Kommunikationssteuereinrichtung 11 beim Dekodieren der Rahmen 450 alle verwendeten Datentypen DT kennen müsste, um zu wissen, wo der Rahmen 450 endet.

Gemäß Fig. 7E ist ein Verschachteln (englisch: nesting) von Datentypen DT ebenfalls möglich. Hierbei kann der Datentyp DT beispielsweise angeben, dass ein Kopf 4554, der im Datenfeld 455 untergebracht ist, auch einen Datentyp DT enthält, wie in Fig. 7E als Beispiel gezeigt. Hierbei ist ein rekursiver Datentyp möglich. In anderen Worten, es ist eine mehrfache Verschachtelung möglich. Hierbei sind beliebig viele bzw. tiefe Verschachtelungen möglich. Daher wird im Datenfeld 455 mindestens ein Feld für einen Datentyp DT vorgesehen und in dieses Feld in dem Datenfeld 455 ein Wert geschrieben, der angibt, welche Art von Information sich in dem Datenfeld 455 des Rahmens 450 befindet. Insbesondere kann dabei das Datenfeld 455 für verschiedene Arten von Informationen genutzt werden.

Bei dem speziellen Beispiel von Fig. 7E hat der Datentyp DT des CAN FX Rahmens den Wert 0x11, was für CANsec steht. Der Sicherheitskopf 4554 im Datenfeld 455 enthält ebenfalls einen Datentyp DT. Wenn in einer mit CANsec abgesicherten Nachricht 45 ein Ethernet-Rahmen 4552 enthalten ist, dann ist der Datentyp DT im Sicherheitskopf 4554 auf 0x21 gesetzt, wie im mittleren Teil von Fig. 7E gezeigt. Wäre im abgesicherten Rahmen ein IPv4-Paket enthalten, so wäre im Sicherheitskopf 4554 der Datentyp DT = 0x20 angegeben.

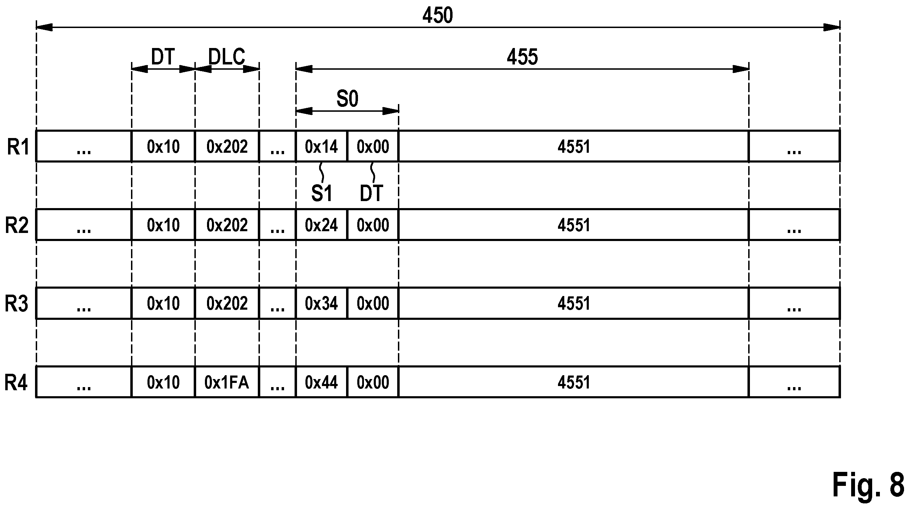

Fig. 8 zeigt in einem speziellen Beispiel, wie eine CAN FX Nachricht 450 mit 2040 Byte in 4 Rahmen R1 bis R4 versendet wird, weil die maximale Menge der Nutzdaten 4551 auf 512 Byte pro Rahmen R1, R2, R3, R4 durch den Benutzer begrenzt wurde. Somit werden 4 Rahmen versendet, nämlich die 3 Rahmen R1, R2, R3 mit je 512 Byte Nutzdaten 4551 und ein Rahmen, nämlich der Rahmen R4 mit 504 Byte Nutzdaten 4551. Der Datenlängecode (DLC) in den ersten 3 Rahmen R1, R2, R3 hat den Wert 514 Byte. In dem letzten Rahmen R4 hat der Datenlängecode (DLC) den Wert 506 Byte, weil jeweils ein Segment-Kopf (Segment-Header) S0 enthalten ist, der 2 Byte hat. In dem ersten Byte des Segment-Kopfes S0 sind in einem Feld S1 die Nummer des aktuellen Segments (4 Bit) und anschließend die Gesamtzahl der Segmente angegeben (4 Bit), wie in Fig. 8 veranschaulicht. Selbstverständlich sind andere Segmentierungen eines Rahmens 450 in Rahmen R1 bis RN möglich, wobei N eine beliebige natürliche Zahl ist.

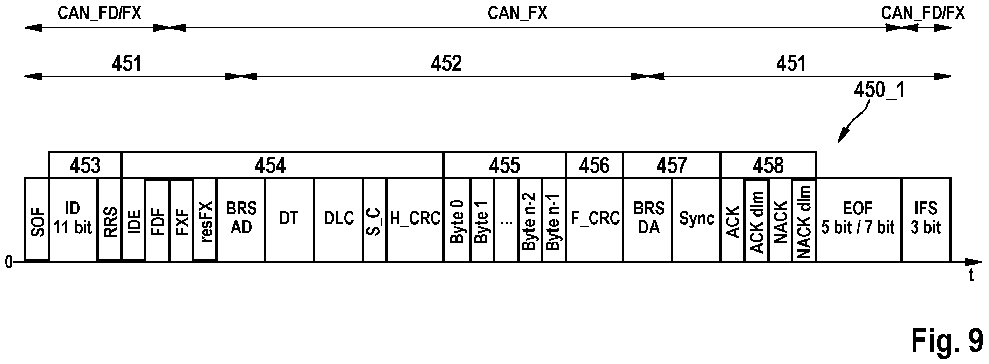

Fig. 9 zeigt einen Rahmen 450_1 gemäß einem dritten Ausführungsbeispiel, bei welchem CAN FX und CAN FD kompatibel sind. Bei diesem Ausführungsbeispiel unterscheidet sich der Rahmen 450_1 und damit das CAN FX Rahmenformat von dem Rahmen 450 von Fig. 2, wie nachfolgend beschrieben. Hierbei sind nur die Unterschiede zu dem Rahmen 450 von Fig. 2 beschrieben. Im Übrigen sind die Rahmen 450, 450_1 der beiden Ausführungsbeispiele gleich.

In dem Rahmen 450_1 ist vor der Kopfprüfsumme H_CRC ein S_C-Feld eingefügt. In dem S_C-Feld wird die Anzahl der gesendeten dynamischen Stuff-Bits (Stuff-Count) übertragen. Das S_C-Feld kann 1 bis n Bits aufweisen. In diesem Fall, also für Rahmen 450_1, kommen maximal 3 dynamische Stuff-Bits vor, d.h. n kann als 2 gewählt werden. Alternativ ist die Übertragung von "Anzahl dynamischer Stuff-Bits modulo X" möglich, um die Zahl der zu übertragenden Bits zu reduzieren. X kann zum Beispiel 2 sein.

Durch diese Variante wird jedoch der Datenüberhang des Rahmens 450_1 im Vergleich zu dem Rahmen 450 von Fig. 2 größer.

Bei einer Modifikation des Rahmens 450_1 wird in dem S_C-Feld anstelle der Anzahl der gesendeten dynamischen Stuff-Bits (Stuff-Count) ein Stuff-Kompensator einfügt. Der Stuff-Kompensator hat 0 bis m Bits, wobei m der maximalen Zahl von dynamischen Stuff-Bits entspricht, die bis zum FDF-Bit vorkommen können. Dabei ist die Summe aus dynamischen Stuff-Bits und Stuff-Kompensatorbits immer gleich m.

Der Stuff-Kompensator sorgt dafür, dass die Länge des Rahmenkopfes des Rahmens 450_1 konstant wird. Beispielsweise können im Fall von 11 Bit für den Identifizierer (ID) maximal drei dynamische Stuff-Bits auftreten. Somit wäre bei einem Identifizierer (ID) mit 11 Bits m = 3. In einem Rahmen 450_1 mit einem dynamischen Stuff-Bit ist der Stuff-Kompensator 2 Bits lang, da gilt 3 - 1 = 2 Bits. Dadurch beginnt das Datenfeld 455 immer nach einer festen Zahl von Bits ab dem Anfang des Rahmens.

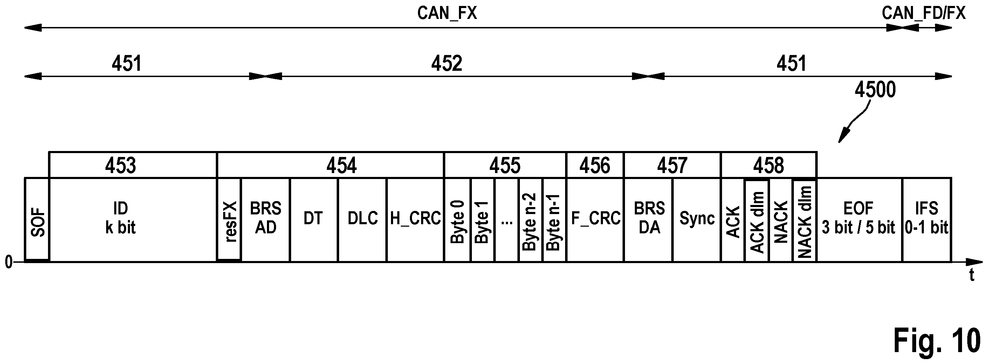

Fig. 10 zeigt einen Rahmen 4500 gemäß einem vierten Ausführungsbeispiel, bei welchem CAN FX und CAN FD nicht kompatibel sind. Bei diesem Ausführungsbeispiel unterscheidet sich der Rahmen 4500 und damit das CAN FX Rahmenformat von dem Rahmen 450 von Fig. 2, wie nachfolgend beschrieben. Hierbei sind nur die Unterschiede zu dem Rahmen 450 von Fig. 2 beschrieben. Im Übrigen sind die Rahmen 450, 4500 der beiden Ausführungsbeispiele gleich.

Allgemein wird bei der Erzeugung des Rahmens 4500 gemäß dem vorliegenden Ausführungsbeispiel nur die feste Stuffing-Regel verwendet, so dass nach einer festen Zahl von Bits ein fixed Stuff-Bit einzufügen ist. Alternativ können statt nur einem Stuff-Bit auch 2 oder mehr Bits als fixed Stuff-Bits eingefügt werden. Dies führt bei bekanntem Wert des Datenlängecodes (DLC) zu einer konstanten Rahmenlänge bzw. einer konstanten Länge des Rahmens 4500. Dies verhindert verschiedene Probleme, die durch dynamische Stuff-Bits hervorgerufen werden.

In dem Rahmen 4500 von Fig. 10 gemäß dem vorliegenden Ausführungsbeispiel ist der Identifizierer (ID) nicht mehr auf eine Anzahl von 11 Bits oder 29 Bits wie bei CAN FD beschränkt. Die Anzahl k der Bits des Identifizierers (ID) kann frei gewählt werden. Die Anzahl k ist jedoch alternativ auf einen festen Wert festlegbar. Für eine hohe Nettodatenrate ist eine ID mit k = 8 Bits sinnvoll. Diese reicht aus, um jeder Teilnehmerstation 10, 20, 30 des Bussystems 1 ausreichend viele Bus-Zugriffs-Prioritäten zu geben. Selbstverständlich ist jedoch ein anderer Wer für k wählbar, je nach Bedarf und Anzahl von verschiedenen Prioritäten in dem Bussystem 1.

Die Bits RRS, IDE, FDF, FXF des Rahmens 450 von Fig. 2 sind bei dem Rahmen 4500 von Fig. 10 nicht mehr notwendig und werden wegelassen. Dies spart 4 Bits ein, so dass der Rahmenüberhang reduziert wird. Dadurch wird die Nettodatenrate im Bussystem 1 erhöht.

Das Endefeld (EOF) hat in dem Rahmen 4500 von Fig. 10 nur noch eine Anzahl von 5 Bits, wenn das NACK-Bit dominant ist. Ist das NACK-Bit dagegen rezessiv, hat das Endefeld (EOF) eine Anzahl von 3 Bits. Dies sorgt dafür, dass am Ende des Rahmens 4500 eine Anzahl von 6 rezessiven Bits gesendet wird. Diese Zahl von rezessiven Bits kann in einem gültigen Rahmen 4500 an keiner anderen Stelle vorkommen, wenn in der Arbitrationsphase 451 nach 5 gleichen Bits ein fixed Stuff-Bit eingefügt wird. Es könnten alternativ mehr als 6 Bits sein. Insbesondere muss die Zahl der EOF Bits an die Zahl der Bits, nach denen ein fixed Stuff-Bit eingefügt wird, angepasst werden.

Der Zwischenrahmenabstand (IFS) benötigt in dem Rahmen 4500 keine Mindestlänge. Insbesondere kann der Zwischenrahmenabstand (IFS) die Länge 0 haben, also komplett entfallen. In einem solchen Fall werden zwei Rahmen 4500 nahtlos nacheinander gesendet. Jedoch ist ein Zwischenrahmenabstand (IFS) mit einer Anzahl von beispielsweise 1 Bit auch sinnvoll, um die Robustheit des Bussystems 1 im Vergleich zu dem zuvor genannten Fall zu erhöhen. Durch die nun 7 rezessiven Bits zwischen zwei Rahmen 4500 kann sich eine neue Teilnehmerstation am Bus 40 zuverlässiger synchronisieren.

Bei dem Rahmen 4500 treten somit keine dynamischen Stuff-Bits auf. Daher wird das Feld S_C aus Fig. 10 nicht benötigt, so dass der Rahmenüberhang noch weiter reduziert wird. Optional kann auch die Kopfprüfsumme H_CRC entfallen, so dass der Rahmenüberhang noch weiter reduziert wird. Dies erhöht die Nettodatenrate im Bussystem 1 noch mehr.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
einer Sende-/Empfangseinrichtung (12; 32) zum Senden eines von der Kommunikationssteuereinrichtung (11; 31) erzeugten Sendesignals (TXD) auf einen Bus (40) des Bussystems (1),
wobei sich für eine Nachricht (45), die zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheidet von einer Bitzeit (t_bt) eines in der zweiten Kommunikationsphase (452) gesendeten Signals,
wobei die Kommunikationssteuereinrichtung (11; 31) ausgestaltet ist, das Sendesignal (TXD) gemäß einem Rahmen (450; 450_1; 4500) zu erzeugen, in dem zusätzlich zu einem Feld (ID), das die Priorität der Nachricht (45) angibt, ein Feld für einen Datentyp (DT) von Nutzdaten vorgesehen ist, die in einem Datenfeld (455) des Rahmens (450; 450_1; 4500) anzuordnen sind,
wobei die Kommunikationssteuereinrichtung (11; 31) ausgestaltet ist, in das Feld für den Datentyp (DT) einen Wert zu schreiben, der angibt, welche Art von Information sich in dem Datenfeld (455) des Rahmens (450; 450_1; 4500) befindet, und
**dadurch gekennzeichnet dass** die Kommunikationssteuereinrichtung (11; 31) ausgestaltet ist, das Feld für den Datentyp (DT) in dem Sendesignal (TXD) vor einem Feld für einen Datenlängecode (DLC) vorzusehen, der die Länge des Datenfelds (455) angibt.

2. Teilnehmerstation (10; 30) nach Anspruch 1, wobei die Kommunikationssteuereinrichtung (11; 31) ausgestaltet ist, ein Feld für den Datentyp (DT) in dem Sendesignal (TXD) nach dem Feld für den Datenlängecode (DLC) des Datenfelds (455) vorzusehen.

3. Teilnehmerstation (10; 30) nach Anspruch 1 oder 2, wobei die Kommunikationssteuereinrichtung (11; 31) ausgestaltet ist, das Feld für den Datentyp (DT) in dem Sendesignal (TXD) in einem ersten und/oder zweiten Byte des Datenfelds (455) vorzusehen.

4. Teilnehmerstation (10; 30) nach einem der Ansprüche 1 bis 3, wobei die Kommunikationssteuereinrichtung (11; 31) ausgestaltet ist, bei einem vorbestimmten Wert in dem Feld für den Datentyp (DT) zusätzlich in dem Datenfeld (455) mindestens ein Feld für einen Datentyp (DT) vorzusehen und in dieses Feld in dem Datenfeld (455) einen Wert zu schreiben, der angibt, welche Art von Information sich in dem Datenfeld (455) des Rahmens (450; 450_1; 4500) befindet.

5. Teilnehmerstation (10; 30) nach Anspruch 4, wobei der vorbestimmte Wert in dem Feld für den Datentyp (DT) angibt, dass die Nutzdaten (4551) in mehrere Rahmen (450; 450_1; 4500) aufgeteilt sind und dem zusätzlichen Feld für einen Datentyp (DT) in dem Datenfeld (455) ein Kopf (S1) vorangestellt ist, dessen Wert die fortlaufende Nummer der Rahmen (R1, R2, R3, R4) und die Gesamtzahl der Rahmen (R1, R2, R3, R4) angibt, in welche die Nutzdaten (4551) aufgeteilt sind.

6. Teilnehmerstation (10; 30) nach einem der Ansprüche 1 bis 5, wobei die Art von Information umfasst, dass die Nutzdaten (4551) Rohdaten aufweisen, oder dass die Nutzdaten (4551) einen Ethernet-Rahmen aufweisen, oder dass die Nutzdaten (4551) ein Paket eines Internet-Protokolls aufweisen, oder dass zumindest ein Teil des Rahmens (450; 450_1; 4500) mit Crypto-Mechanismen abgesichert ist, oder dass die Nutzdaten (4551) Daten zum Aushandeln eines vorbestimmten Parameters zur Kommunikation in dem Bussystem (1) aufweisen, oder dass die Nutzdaten (4551) Daten zur Zeitsynchronisation aufweisen, oder dass die Nutzdaten (4551) einen Nachrichtenidentifizierer (4553) aufweisen, oder dass die Nutzdaten (4551) Angaben zur Quelle und zum Ziel der Nachricht (45) aufweisen.

7. Teilnehmerstation (10; 30) nach einem der vorangehenden Ansprüche, wobei der Kommunikationssteuereinrichtung (11; 31) mindestens ein vorbestimmter Wert für einen Datentyp (DT) exklusiv zur Verfügung steht, der nicht von anderen Einheiten der Teilnehmerstation (10; 30) gesendet werden darf.

8. Teilnehmerstation (10; 30) nach einem der vorangehenden Ansprüche, zudem mit einem Protokoll-Erweiterungs-Block (112), der zur Auswertung des Felds für den Datentyp (DT) und des optional vorhandenen zusätzlichen Felds für einen Datentyp (DT) in den Nutzdaten (4551) und zur Ausführung der erforderlichen Behandlung der Nachricht (45) auf der Grundlage eines Auswerteergebnisses ausgestaltet ist.

9. Teilnehmerstation (10; 30) nach Anspruch 8, wobei der Protokoll-Erweiterungs-Block (112) mindestens ein Modul (1121 bis 112N) aufweist, welches die Auswertung und die Ausführung der erforderlichen Behandlung der Nachricht (45) ausführt.

10. Teilnehmerstation (10; 30) nach Anspruch 8 oder 9, wobei die Auswertung und/oder die Ausführung der erforderlichen Behandlung der Nachricht (45) mittels Hardware ausgeführt werden/wird.

11. Teilnehmerstation (10; 30) nach einem der Ansprüche 8 bis 10, wobei die Auswertung und/oder die Ausführung der erforderlichen Behandlung der Nachricht (45) mittels Software ausgeführt wird, die auf einem Mikrocontroller (13) der Teilnehmerstation (10; 30) abläuft.

12. Teilnehmerstation (10; 30) nach einem der vorangehenden Ansprüche, wobei der für die Nachricht (45) gebildete Rahmen (450; 450_1) kompatibel zu CAN FD aufgebaut ist.

13. Teilnehmerstation (10; 30) nach einem der vorangehenden Ansprüche, wobei in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) nach einem der vorangehenden Ansprüche ist.

15. Verfahren zur Kommunikation in einem seriellen Bussystem (1), wobei das Verfahren mit einer Teilnehmerstation (10; 30) des Bussystems (1) ausgeführt wird, die eine Kommunikationssteuereinrichtung (11; 31) und eine Sende-/Empfangseinrichtung (12; 32) aufweist, wobei das Verfahren die Schritte aufweist,
Steuern, mit der Kommunikationssteuereinrichtung (11; 31) einer Kommunikation der Teilnehmerstation (10; 30) mit mindestens einer anderen Teilnehmerstation (10; 20; 30) des Bussystems (1), und
Senden, mit der Sende-/Empfangseinrichtung (12; 32), eines von der Kommunikationssteuereinrichtung (11; 31) erzeugten Sendesignals (TXD) auf einen Bus (40) des Bussystems (1),
wobei sich für eine Nachricht (45), die zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheidet von einer Bitzeit (t_bt) eines in der zweiten Kommunikationsphase (452) gesendeten Signals,
wobei die Kommunikationssteuereinrichtung (11; 31) das Sendesignal (TXD) gemäß einem Rahmen (450; 450_1; 4500) erzeugt, in dem zusätzlich zu einem Feld (ID), das die Priorität der Nachricht (45) angibt, ein Feld für einen Datentyp (DT) von Nutzdaten vorgesehen ist, die in einem Datenfeld (455) des Rahmens (450; 450_1; 4500) anzuordnen sind, und
wobei die Kommunikationssteuereinrichtung (11; 31) in das Feld für den Datentyp (DT) einen Wert schreibt, der angibt, welche Art von Information sich in dem Datenfeld (455) des Rahmens (450; 450_1; 4500) befindet, und
**dadurch gekennzeichnet dass** die Kommunikationssteuereinrichtung (11; 31) das Feld für den Datentyp (DT) in dem Sendesignal (TXD) vor einem Feld für einen Datenlängecode (DLC) vorsieht, der die Länge des Datenfelds (455) angibt.

## Claims

1. Subscriber station (10; 30) for a serial bus system (1), having
a communication control device (11; 31) for controlling communication between the subscriber station (10; 30) and at least one other subscriber station (10; 20; 30) of the bus system (1), and
a transmitting/receiving device (12; 32) for transmitting a transmission signal (TXD) generated by the communication control device (11; 31) to a bus (40) of the bus system (1),
wherein, for a message (45) exchanged between subscriber stations (10, 20, 30) of the bus system (1), the bit time (t_bt) of a signal transmitted onto the bus (40) in the first communication phase (451) differs from a bit time (t_bt) of a signal transmitted in the second communication phase (452),
wherein the communication control device (11; 31) is configured to generate the transmission signal (TXD) according to a frame (450; 450_1; 4500) in which, in addition to a field (ID) indicating the priority of the message (45), there is provision for a field for a data type (DT) of payload data that are to be arranged in a data field (455) of the frame (450; 450_1; 4500),
wherein the communication control device (11; 31) is configured to write a value indicating what type of information the data field (455) of the frame (450; 450_1; 4500) contains to the field for the data type (DT), and
**characterized in that** the communication control device (11; 31) is configured to provide the field for the data type (DT) in the transmission signal (TXD) before a field for a data length code (DLC) that indicates the length of the data field (455).

2. Subscriber station (10; 30) according to Claim 1, wherein the communication control device (11; 31) is configured to provide a field for the data type (DT) in the transmission signal (TXD) after the field for the data length code (DLC) of the data field (455).

3. Subscriber station (10; 30) according to Claim 1 or 2, wherein the communication control device (11; 31) is configured to provide the field for the data type (DT) in the transmission signal (TXD) in a first and/or second byte of the data field (455).

4. Subscriber station (10; 30) according to one of Claims 1 to 3, wherein the communication control device (11; 31) is configured, given a predetermined value in the field for the data type (DT), to additionally provide at least one field for a data type (DT) in the data field (455) and to write a value indicating what type of information the data field (455) of the frame (450; 450_1; 4500) contains to this field in the data field (455).

5. Subscriber station (10; 30) according to Claim 4, wherein the predetermined value in the field for the data type (DT) indicates that the payload data (4551) are split into multiple frames (450; 450_1; 4500) and the additional field for a data type (DT) in the data field (455) is preceded by a header (S1), the value of which indicates the sequential number of the frames (R1, R2, R3, R4) and the total number of frames (R1, R2, R3, R4) into which the payload data (4551) are split.

6. Subscriber station (10; 30) according to one of Claims 1 to 5, wherein the type of information encompasses the payload data (4551) comprising raw data, or the payload data (4551) comprising an Ethernet frame, or the payload data (4551) comprising a packet of an Internet protocol, or at least part of the frame (450; 450_1; 4500) being secured by crypto mechanisms, or the payload data (4551) comprising data for negotiating a predetermined parameter for communication in the bus system (1), or the payload data (4551) comprising data for time synchronization, or the payload data (4551) comprising a message identifier (4553), or the payload data (4551) comprising information on the source and destination of the message (45).

7. Subscriber station (10; 30) according to one of the preceding claims, wherein the communication control device (11; 31) has at least one predetermined value for a data type (DT) exclusively available that cannot be transmitted by other units of the subscriber station (10; 30).

8. Subscriber station (10; 30) according to one of the preceding claims, additionally having a protocol extension block (112) that is configured to evaluate the field for the data type (DT) and the optionally present additional field for a data type (DT) in the payload data (4551) and to perform the necessary handling of the message (45) on the basis of an evaluation result.

9. Subscriber station (10; 30) according to Claim 8, wherein the protocol extension block (112) comprises at least one module (1121 to 112N) that carries out the evaluation and the performance of the necessary handling of the message (45).

10. Subscriber station (10; 30) according to Claim 8 or 9, wherein the evaluation and/or the performance of the necessary handling of the message (45) are/is carried out by means of hardware.

11. Subscriber station (10; 30) according to one of Claims 8 to 10, wherein the evaluation and/or the performance of the necessary handling of the message (45) is carried out by means of software that runs on a microcontroller (13) of the subscriber station (10; 30).

12. Subscriber station (10; 30) according to one of the preceding claims, wherein the frame (450; 450_1) formed for the message (45) is constructed in a manner compatible with CAN FD.

13. Subscriber station (10; 30) according to one of the preceding claims, wherein it is negotiated, in the first communication phase (451), which of the subscriber stations (10, 20, 30) of the bus system (1) receives at least temporarily exclusive, collision-free access to the bus (40) in the subsequent, second communication phase (452).

14. Bus system (1) having
a bus (40), and
at least two subscriber stations (10; 20; 30) that are connected to one another via the bus (40) in such a way that they can communicate serially with one another, and at least one of which is a subscriber station (10; 30) according to one of the preceding claims.

15. Method for communication in a serial bus system (1), the method being carried out using a subscriber station (10; 30) of the bus system (1), which subscriber station comprises a communication control device (11; 31) and a transmitting/receiving device (12; 32), wherein the method comprises the steps of
controlling, using the communication control device (11; 31), communication between the subscriber station (10; 30) and at least one other subscriber station (10; 20; 30) of the bus system (1), and
using the transmitting/receiving device (12; 32) to transmit a transmission signal (TXD) generated by the communication control device (11; 31) to a bus (40) of the bus system (1),
wherein, for a message (45) exchanged between subscriber stations (10, 20, 30) of the bus system (1), the bit time (t_bt) of a signal transmitted onto the bus (40) in the first communication phase (451) differs from a bit time (t_bt) of a signal transmitted in the second communication phase (452),
wherein the communication control device (11; 31) generates the transmission signal (TXD) according to a frame (450; 450_1; 4500) in which, in addition to a field (ID) indicating the priority of the message (45), there is provision for a field for a data type (DT) of payload data that are to be arranged in a data field (455) of the frame (450; 450_1; 4500), and
wherein the communication control device (11; 31) writes a value indicating what type of information the data field (455) of the frame (450; 450_1; 4500) contains to the field for the data type (DT), and
**characterized in that** the communication control device (11; 31) provides the field for the data type (DT) in the transmission signal (TXD) before a field for a data length code (DLC) that indicates the length of the data field (455).

## Revendications

1. Station d'abonné (10 ; 30) pour un système de bus série (1), comprenant
un dispositif de commande de communication (11 ; 31) destiné à commander une communication de la station d'abonné (10 ; 30) avec au moins une autre station d'abonné (10 ; 20 ; 30) du système de bus (1), et
un dispositif d'émission/réception (12 ; 32) destiné à émettre un signal d'émission (TXD) généré par le dispositif de commande de communication (11 ; 31) sur un bus (40) du système de bus (1),
pour un message (45) qui est échangé entre des stations d'abonné (10, 20, 30) du système de bus (1), le temps de bit (t_bt) d'un signal envoyé sur le bus (40) dans la première phase de communication (451) étant différent d'un temps de bit (t_bt) d'un signal envoyé dans la deuxième phase de communication (452),
le dispositif de commande de communication (11 ; 31) étant conçu pour générer le signal d'émission (TXD) selon une trame (450 ; 450_1 ; 4500) dans laquelle, en plus d'un champ (ID) qui indique la priorité du message (45), est prévu un champ pour un type de données (DT) de données utiles, qui doivent être disposées dans un champ de données (455) de la trame (450 ; 450_1 ; 4500),
le dispositif de commande de communication (11 ; 31) étant conçu pour écrire, dans le champ destiné au type de données (DT), une valeur qui indique quel type d'informations se trouve dans le champ de données (455) de la trame (450 ; 450_1 ; 4500), et
**caractérisée en ce que** le dispositif de commande de communication (11 ; 31) est conçu pour prévoir le champ pour le type de données (DT) dans le signal d'émission (TXD) avant un champ pour un code de longueur de données (DLC), qui indique la longueur du champ de données (455).

2. Station d'abonné (10 ; 30) selon la revendication 1, le dispositif de commande de communication (11 ; 31) étant conçu pour prévoir un champ pour le type de données (DT) dans le signal d'émission (TXD) après le champ pour le code de longueur de données (DLC) du champ de données (455).

3. Station d'abonné (10 ; 30) selon la revendication 1 ou 2, le dispositif de commande de communication (11 ; 31) étant conçu pour prévoir le champ pour le type de données (DT) dans le signal d'émission (TXD) dans un premier et/ou un deuxième octet du champ de données (455).

4. Station d'abonné (10 ; 30) selon l'une des revendications 1 à 3, le dispositif de commande de communication (11 ; 31) étant conçu pour, en présence d'une valeur prédéterminée dans le champ pour le type de données (DT), prévoir en plus dans le champ de données (455) au moins un champ pour un type de données (DT) et pour écrire dans ce champ dans le champ de données (455) une valeur qui indique quel type d'informations se trouve dans le champ de données (455) de la trame (450 ; 450_1 ; 4500).

5. Station d'abonné (10 ; 30) selon la revendication 4, la valeur prédéterminée dans le champ pour le type de données (DT) indiquant que les données utiles (4551) sont réparties dans plusieurs trames (450 ; 450_1 ; 4500) et qu'un entête (S1) est placé devant le champ supplémentaire pour un type de données (DT) dans le champ de données (455), dont la valeur indique le numéro séquentiel des trames (R1, R2, R3, R4) et le nombre total des trames (R1, R2, R3, R4) dans lesquelles sont réparties les données utiles (4551).

6. Station d'abonné (10 ; 30) selon l'une des revendications 1 à 5, le type d'informations comprenant le fait que les données utiles (4551) possèdent des données brutes, ou que les données utiles (4551) possèdent une trame Ethernet, ou que les données utiles (4551) possèdent un paquet d'un protocole Internet, ou qu'au moins une partie de la trame (450 ; 450_1 ; 4500) est sécurisée par des mécanismes cryptographiques, ou que les données utiles (4551) possèdent des données servant à négocier un paramètre prédéterminé pour la communication dans le système de bus (1), ou que les données utiles (4551) possèdent des données servant à la synchronisation temporelle, ou que les données utiles (4551) possèdent un identifiant de message (4553), ou que les données utiles (4551) possèdent des indications à propos de la source et de la destination du message (45).

7. Station d'abonné (10 ; 30) selon l'une des revendications précédentes, le dispositif de commande de communication (11 ; 31) disposant en exclusivité d'au moins une valeur prédéterminée pour un type de données (DT) qui ne doit pas être envoyé par d'autres unités de la station d'abonné (10 ; 30).

8. Station d'abonné (10 ; 30) selon l'une des revendications précédentes, comprenant en outre un bloc d'extension de protocole (112) qui est conçu pour évaluer le champ pour le type de données (DT) et le champ supplémentaire présent en option pour un type de données (DT) dans les données utiles (4551) et pour exécuter le traitement nécessaire du message (45) sur la base d'un résultat d'évaluation.

9. Station d'abonné (10 ; 30) selon la revendication 8, le bloc d'extension de protocole (112) possédant au moins un module (1121 à 112N), lequel effectue l'évaluation et l'exécution du traitement nécessaire du message (45).

10. Station d'abonné (10 ; 30) selon la revendication 8 ou 9, l'évaluation et/ou l'exécution du traitement nécessaire du message (45) étant effectuées au moyen d'un matériel.

11. Station d'abonné (10 ; 30) selon l'une des revendications 8 à 10, l'évaluation et/ou l'exécution du traitement nécessaire du message (45) étant effectuée(s) au moyen d'un logiciel qui est exécuté sur un microcontrôleur (13) de la station d'abonné (10 ; 30).

12. Station d'abonné (10 ; 30) selon l'une des revendications précédentes, la trame (450 ; 450_1) formée pour le message (45) étant structurée compatible avec CAN FD.

13. Station d'abonné (10 ; 30) selon l'une des revendications précédentes, celle des stations d'abonné (10, 20, 30) du système de bus (1) qui obtient, dans la deuxième phase de communication (452) qui suit, un accès au bus (40) au moins temporairement exclusif, sans collision, étant négociée dans la première phase de communication (451).

14. Système de bus (1), comprenant
un bus (40), et
au moins deux stations d'abonné (10 ; 20 ; 30), lesquelles sont reliées l'une à l'autre par le biais du bus (40), de telle sorte qu'elles peuvent communiquer en série entre elles et parmi lesquelles au moins une station d'abonné (10 ; 30) est selon l'une des revendications précédentes.

15. Procédé de communication dans un système de bus série (1), le procédé étant mis en œuvre avec une station d'abonné (10 ; 30) du système de bus (1), qui comprend un dispositif de commande de communication (11 ; 31) et un dispositif d'émission/réception (12 ; 32), le procédé comprenant les étapes suivantes :
commande, avec le dispositif de commande de communication (11 ; 31), d'une communication de la station d'abonné (10 ; 30) avec au moins une autre station d'abonné (10 ; 20 ; 30) du système de bus (1), et
émission, avec le dispositif d'émission/réception (12 ; 32), d'un signal d'émission (TXD) généré par le dispositif de commande de communication (11 ; 31) sur un bus (40) du système de bus (1),
pour un message (45) qui est échangé entre des stations d'abonné (10, 20, 30) du système de bus (1), le temps de bit (t_bt) d'un signal envoyé sur le bus (40) dans la première phase de communication (451) étant différent d'un temps de bit (t_bt) d'un signal envoyé dans la deuxième phase de communication (452),
le dispositif de commande de communication (11 ; 31) générant le signal d'émission (TXD) selon une trame (450 ; 450_1 ; 4500) dans laquelle, en plus d'un champ (ID) qui indique la priorité du message (45), est prévu un champ pour un type de données (DT) de données utiles, qui doivent être disposées dans un champ de données (455) de la trame (450 ; 450_1 ; 4500), et
le dispositif de commande de communication (11 ; 31) écrivant, dans le champ destiné au type de données (DT), une valeur qui indique quel type d'informations se trouve dans le champ de données (455) de la trame (450 ; 450_1 ; 4500), et
**caractérisé en ce que** le dispositif de commande de communication (11 ; 31) prévoit le champ pour le type de données (DT) dans le signal d'émission (TXD) avant un champ pour un code de longueur de données (DLC), qui indique la longueur du champ de données (455).
